# EUROPÄISCHE PATENTSCHRIFT

(11) **EP 3 867 044 B1**
(45) Veröffentlichungstag und Bekanntmachung des Hinweises auf die Patenterteilung: **04.01.2023**
(21) Anmeldenummer: 19789667.3
(22) Anmeldetag: 15.10.2019
(51) Int. Cl.: B29C 65/34, B29C 65/20, B29C 65/30, B29C 65/22, B29L 31/30, B29C 65/48, B29C 65/50

(54) **VERFAHREN UND EINLEGER ZUM VERSCHWEISSEN THERMOPLASTISCHER BAUTEILE**
METHOD AND INSERT FOR WELDING THERMOPLASTIC COMPONENTS
PROCÉDÉ ET SYSTÈME D'INSERTION SERVANT À SOUDER DES COMPOSANTS THERMOPLASTIQUES

(30) Priorität: 15.10.2018 DE 102018217586
(43) Veröffentlichungstag der Anmeldung: 25.08.2021
(73) Patentinhaber: Airbus Operations GmbH, 21129 Hamburg (DE)
(72) Erfinder: FINGER, Lennart, 21129 Hamburg (DE); HINZ, Remo, 21129 Hamburg (DE); KECK, Alexander, 21129 Hamburg (DE); KOEHLER, Filipp, 21129 Hamburg (DE); VICHNIAKOV, Alexei, 21129 Hamburg (DE)
(86) Internationale Anmeldenummer: PCT/EP2019/077991
(87) Internationale Veröffentlichungsnummer: WO 2020/079010

(56) Entgegenhaltungen:
- EP-A1- 1 099 533
- EP-B1- 1 099 533
- WO-A2-2007/016152

## Beschreibung

Die vorliegende Erfindung betrifft ein Verfahren zum Verschweißen thermoplastischer Bauteile, insbesondere thermoplastischer Faserverbundstrukturbauteile für ein Luft- oder Raumfahrzeug, sowie einen Einleger zum Widerstandsschweißen thermoplastischer Bauteile, insbesondere mit einem derartigen Verfahren.

Obwohl die vorliegende Erfindung sowie die ihr zugrunde liegende Problematik nachfolgend in Bezug auf das flächige Verschweißen thermoplastischer Faserverbundstrukturbauteile für Luft- oder Raumfahrzeuge näher beschrieben wird, ist sie darauf nicht beschränkt sondern auf vielfältige thermoplastische Bauteile anwendbar.

Bisweilen werden flächig zu verschweißende thermoplastische Bauteile oftmals in einem statischen Prozess mit einem Heizelement verschweißt. Hierbei handelt es sich in der Regel um ein zwischen die Bauteile eingelegtes leitfähiges Gitter oder Gewebe, welche nach dem Schweißvorgang in der Fügezone verbleiben. Beispielsweise beschreibt die DE 10 2009 047 671 A1 eine zwischen ein thermoplastisches Strukturbauteil und ein thermoplastisches Faserverbundbauteil einzubringende mit Verankerungsabschnitten versehene Metallfolie und ein Verschweißen des Faserverbundbauteils mit dem Strukturbauteil nach dem Einfügen der Metallfolie, wobei sich die Verankerungsabschnitte in das jeweils zugehörige Bauteil erstrecken.

Die Schrift WO 2007/016152 A2 offenbart ein Verfahren zum Verbinden eines ersten Teils und eines zweiten Teils, wobei die Teile ein Polymermaterial umfassen, wobei das Verfahren umfasst: Bereitstellen eines ersten Teils mit einer Oberfläche, die eine Nut enthält; Ausrichten der Oberfläche des ersten Teils und einer Oberfläche des zweiten Teils; Anordnen eines leitenden Elements in der Nut; und Verbinden des ersten Teils und des zweiten Teils entlang der ausgerichteten Oberflächen. Die Schrift EP 1099533 A1 offenbart eine Vorrichtung zum Verbinden eines Befestigungsklammersitzes mit einer Schutzleiste, wobei die Klammer einstückig mit einer Kante der Leiste über ein Scharnier verbunden ist, wobei die Klammer Vorsprünge aufweist, die durch Biegen um das Scharnier in Kontakt mit einer Oberfläche der Leiste gebracht werden können, wobei elektrisch beheizte Elemente zwischen den Vorsprüngen und der Leiste angeordnet sind, wodurch solche Teile des Clips geschmolzen und mit der Leiste verbunden werden können; dadurch gekennzeichnet, dass ein elektrisches Drahtheizelement ein erstes elektrisches Verbindungselement aufweist, das mit einem Ende des Heizelements verbunden ist, mit einem Mittel zum Bewegen des ersten Verbindungselements und des Heizelements in Kontakt mit einer Oberfläche der Leiste, wobei ein zweites elektrisches Verbindungselement so angepasst ist, dass es das andere Ende des Heizelements berührt und mit diesem verbunden ist, eine Biegevorrichtung zum Drehen der Klammer um das Scharnier und zum Überlappen der Klammer mit der Rückseite der Leiste und zum Überlagern des Heizelements, ein Druckelement zum Halten des überlappten Klammersitzes in Position, eine Stromquelle zum Anlegen von elektrischem Strom zwischen dem ersten Verbindungselement und dem zweiten Verbindungselement, um Teile der Klammer mit der Oberfläche der Leiste zu verschmelzen, mit Mitteln, die zum anschließenden Herausziehen der Heizelemente dienen.

Vor diesem Hintergrund liegt der vorliegenden Erfindung die Aufgabe zugrunde, ein verbessertes Verfahren zum Verschweißen thermoplastischer Bauteile anzugeben.

Erfindungsgemäß wird diese Aufgabe gelöst durch ein Verfahren zum Verschweißen thermoplastischer Bauteile mit den Merkmalen des Patentanspruchs 1 sowie durch einen Einleger zum Verschweißen thermoplastischer Bauteile mit den Merkmalen des Patentanspruchs 14.

Demgemäß ist ein Verfahren zum Verschweißen thermoplastischer Bauteile, insbesondere thermoplastischer Faserverbundstrukturbauteile für ein Luft- oder Raumfahrzeug, vorgesehen. Das Verfahren umfasst die folgenden Schritte: Anordnen eines Einlegers, der eine Leiterstruktur mit einer Vielzahl paralleler elektrischer Leiterelemente aufweist, in einer Fügezone zwischen einem ersten thermoplastischen Bauteil und einem zweiten thermoplastischen Bauteil, so dass sich die parallelen elektrischen Leiterelemente zumindest abschnittsweise in der Fügezone befinden; Lokales Aufschmelzen der Bauteile im Bereich der Fügezone durch Bestromen der Leiterstruktur; Trennen der Leiterelemente; und Entfernen des Einlegers aus der Fügezone durch Herausziehen der getrennten Leiterelemente.

Darüber hinaus ist ein Einleger zum Widerstandsschweißen thermoplastischer Bauteile, insbesondere mit einem erfindungsgemäßen Verfahren, vorgesehen. Der Einleger umfasst: Eine Vielzahl paralleler elektrischer Leiterelemente mit einer gemeinsamen Längsrichtung; eine erste Querverbindung an einem ersten längsseitigen Ende und eine zweite Querverbindung an einem zweiten längsseitigen Ende der Leiterelemente; und eine vorbestimmte Trennstelle an jedem Leiterelement, welche zum Trennen des Leiterelements durch eine an zumindest einer der Querverbindungen aufgebrachte Zugkraft ausgebildet ist.

Die der vorliegenden Erfindung zugrunde liegende Idee besteht darin, einen zum Einbringen der zum Schweißen benötigten Wärme in die Fügezone vorgesehenen Einleger, auch als Inlay bezeichnet, nach dem Schmelzen des Materials in der Fügezone, insbesondere noch in einem schmelzflüssigen Zustand des Materials, aus der Fügezone zu entfernen. Erfindungsgemäß werden dazu eine Vielzahl parallel zueinander verlaufender Leiterelemente vorgesehen, welche nach dem Schmelzen in einer vorbestimmten Weise getrennt werden. Die getrennten Leiterelemente können sodann, insbesondere seitlich, aus der Fügezone herausgezogen werden.

Vorteilhaft verbleibt somit keinerlei nach dem Schweißen nicht mehr benötigtes Einlegermaterial in der Fügezone. Auf diese Weise werden die mechanischen Eigenschaften der Fügezone verbessert. Ferner werden dabei Korrosionsaspekte eliminiert sowie innere Spannungen durch thermische Dehnung und auch Einflüsse auf Blitzableitungseigenschaften vermieden.

Die Längen und Querschnitte der Leiterelemente sind variabel anpassbar, insbesondere hinsichtlich der Geometrie der zu fügenden Bauteile. Beispielsweise kann durch eine entsprechende Auslegung der Leiterelemente die eingebrachte Schweißenergie gesteuert werden.

Vorzugsweise weisen die Leiterelemente eine isolierende Beschichtung auf, sodass ein Kurzschluss mit etwaigen in das thermoplastische Material eingebetteten Fasern vermieden und somit ein problemloser Einsatz bei faserverstärkten thermoplastischen Bauteilen, insbesondere auch im Falle leitfähiger Fasern, ermöglicht ist. Darüber hinaus besteht bei einer Weiterbildung die Möglichkeit, die isolierende Beschichtung in einem Randbereich der Fügezone und/oder in einem etwaigen über die Fügezone hinausgehenden Bereich der Leiterelemente lokal dicker als in einem Zentrum der Fügezone vorzusehen. Auf diese Weise wird der sogenannte "Edge Effect", unter welchem eine lokale Überhitzung am Rand einer Fügezone verstanden wird, vermieden oder minimiert.

Erfindungsgemäß werden dabei die typischen Vorteile des Widerstandsschweißprozesses für thermoplastische Bauteile, beispielsweise der effiziente und schnelle Wärmeeintrag direkt in die Fügezone, was in geringeren thermischen Belastungen und Deformationen der zu fügenden Bauteile resultiert, beibehalten.

Die thermoplastischen Bauteile können beispielsweise thermoplastische Faserverbundwerkstoffe mit einem thermoplastischen Matrixsystem enthalten. Beispielsweise kommen für die Anwendung bei Strukturbauteilen für Luft-oder Raumfahrzeuge hochtemperaturfeste Kunststoffe wie Polyetherketone (PEK), beispielsweise Polyetheretherketon (PEEK), Polyetherketonketon (PEKK), Polyaryletherketon (PAEK), oder auch Polyphenylensulfid (PPS) in Frage.

Erfindungsgemäß kann insbesondere eine automatische Prozesssteuerung des Schweißprozesses realisiert werden, denn zu dem Zeitpunkt in dem das Leiterelement getrennt wird ist automatisch auch der Stromfluss unterbrochen und die Fügezone beginnt sich abzukühlen. Vorzugsweise während das thermoplastische Material noch geschmolzen ist, d.h. bevor die Temperatur unterhalb des Schmelzpunktes sinkt, werden die getrennten Leiterelemente aus der Fügezone herausgezogen und so der Einleger entfernt.

Nach dem Entfernen des Einlegers aus der Fügezone kann eine abschließende Konsolidierung der Fügezone vorgenommen werden, insbesondere mittels eines die Bauteile miteinander verpressenden Drucks.

Vorteilhafte Ausgestaltungen und Weiterbildungen ergeben sich aus den weiteren Unteransprüchen sowie aus der Beschreibung unter Bezugnahme auf die Figuren. Gemäß einer vorteilhaften Weiterbildung wird das Trennen der Leiterelemente durch Aufbringen einer Zugkraft auf die Leiterelemente vorgenommen. Somit können das Trennen und das Herausziehen der Leiterelemente in einen gemeinsamen Schritt erfolgen. Alternativ oder zusätzlich zu der Zugkraft kann das Trennen auch elektrisch vorgenommen oder unterstützt werden, beispielsweise durch einen zu einer Trennung des Leiterelements führenden Stromstoß.

Gemäß einer vorteilhaften Ausführungsform sind die Leiterelemente jeweils länglich und entlang einer gemeinsamen Längsrichtung gerade ausgebildet. Das Aufbringen der Zugkraft und das Herausziehen wird entsprechend in der Längsrichtung vorgenommen. Auf diese Weise ist das Herausziehen vereinfacht und eine Beeinflussung der Fügezone wird dadurch minimiert.

Gemäß einer Ausführungsform weist die Leiterstruktur an beiden längsseitigen Enden der Leiterelemente jeweils eine außerhalb oder am Rand der Fügezone angeordnete Querverbindung auf. Das Trennen umfasst dabei ein Abtrennen zumindest eines Abschnitts eines jeden der Leiterelemente von einer der Querverbindungen. Unter einer Leiterstruktur ist somit eine Anordnung von in Längsrichtung parallel verlaufenden elektrischen Leiterelementen und quer dazu verlaufenden elektrisch leitfähigem Querverbindungen zu verstehen. Auf diese Weise lässt sich einerseits eine gemeinsame Bestromung der Leiterelemente in einfacher Weise realisieren und zudem eine Zugkraft gemeinsam auf die Leiterelemente zum Trennen und Herausziehen derselben aufbringen. Sofern die Leiterelemente an den Querverbindungen enden kann die Leiterstruktur vor dem Trennen in der Form einer Leiter bzw. leiterförmig mit den Querverbindungen als Holme und den Leiterelementen als Sprossen gebildet sein. Eine Verbindung zwischen den Leiterelementen an den Querverbindungen kann fest, insbesondere stoffschlüssig, oder reversibel lösbar, beispielsweise kraftschlüssig, ausgebildet sein.

Gemäß einer Ausführungsform werden die Leiterelemente in einem mittigen Bereich der Leiterelemente getrennt. Insbesondere kann dazu eine mittige Verjüngung der Leiterelemente vorgesehen sein. Die mittige Verjüngung dient als Sollbruchstelle, sodass die Leiterelemente im Bereich der Verjüngung getrennt werden. Bei der Verjüngung kann es sich beispielsweise um eine Kerbe handeln. Eine derartige Kerbe kann umlaufend oder lediglich an einer Seite des Leiterelements vorgesehen sein. Alternativ oder zusätzlich kann es sich um eine kontinuierliche Verjüngung handeln, beispielsweise eine eindimensionale Verjüngung, wie eine Abflachung, eine zweidimensionale Verjüngung, wie eine Abflachung und Schmälerung oder eine umlaufende Verjüngung, beispielsweise eine konisch zulaufende Verjüngung. Neben der Funktion als Sollbruchstelle kann über die Verjüngung auch die Wärmeverteilung entlang der Leiterelemente gesteuert werden. Insbesondere ist es durch eine mittige Verjüngung ermöglicht, ein Profil der eingebrachten ohmschen Wärme möglichst gleichmäßig zu gestalten, da mit der Variation des Querschnitts auch der ohmsche Widerstand variiert wird. Dabei sorgt die mittige Verjüngung aufgrund des lokal verringerten Querschnitts für eine höhere Wärmeabgabe in einem mittigen Bereich der Fügezone, welcher ansonsten aufgrund der Wärmeleitung in den Bauteilen kühler als ein Randbereich der Fügezone wäre bzw. länger zum Aufheizen auf eine zum Schweißen geeignete Temperatur bräuchte. Ferner kann die Verjüngung, insbesondere im Fall einer Kerbe, auch eingesetzt werden um mit einem Stromstoß am Ende des Schweißvorgangs eine lokale starke Erhitzung herbeizuführen, um so das Abtrennen zu unterstützen.

Gemäß einer weiteren Ausführungsform werden die Leiterelemente jeweils in einem Stoßbereich mit einer der Querverbindungen getrennt. Vorteilhaft erlaubt dies eine Trennung ohne Bruch, beispielsweise mittels einer auf einem Kraft- und/oder Formschluss basierenden Kopplung und Trennung, welche reversibel ist. Als weiteren Vorteil kann das Herausziehen der gesamten Leiterelemente somit durch Aufbringen einer Zugkraft lediglich an der gegenüberliegenden Querverbindung in einer gemeinsamen Richtung vorgenommen werden.

Gemäß einer Ausführungsform sind die Leiterelemente mit einer der Querverbindungen kraftschlüssig gekoppelt. Der Kraftschluss wird bei dem Trennen überwunden. Insbesondere wird der Kraftschluss durch die Zugkraft überwunden. Vorzugsweise ist der Kraftschluss reversibel wiederherstellbar. Auf diese Weise ist der Einleger vorteilhaft wiederverwendbar.

Gemäß einer Ausführungsform weisen die Querverbindungen einen Mantel auf, der einen Anschlussleiter und eine Isolierschicht enthält, wobei die Zugkraft über den Mantel aufgebracht wird. Bei dem Mantel handelt es sich somit um ein funktionsintegriertes Teil, welches zur Stromversorgung, zur Isolation und zum Entfernen des Einlegers dient. Die Isolierschicht ist insbesondere gleichzeitig zur Kraftübertragung der Zugkraft ausgelegt, beispielsweise im Falle einer händischen Aufbringung der Zugkraft mit einer gut greifbaren Oberfläche oder im Falle einer maschinellen Aufbringung der Zugkraft mit einer geeigneten Koppelstelle zu einem Zugaktuator. Die Querverbindungen können, insbesondere formschlüssig, mit dem Mantel gekoppelt sein. Alternativ kann der Mantel auch die Querverbindung bilden bzw. darstellen. Ferner kann der Mantel bei einer Ausführungsform zusätzlich derart ausgebildet sein, dass er bei dem Schweißen gleichzeitig auch als seitliche Schmelzbadstütze am Rand der Fügezone dient.

Gemäß einer Ausführungsform befindet sich ein Material der thermoplastischen Bauteile während des Entfernens im Bereich der Fügezone oberhalb seiner Schmelztemperatur. Insbesondere handelt es sich um das thermoplastische Material oder ein thermoplastisches Matrixmaterial der Bauteile. Auf diese Weise ist eine Konsolidierung nach dem Herausziehen ermöglicht.

Gemäß einer Ausführungsform werden die Bauteile nach dem Herausziehen zumindest in dem Bereich der Fügezone zusammengepresst. Alternativ oder zusätzlich werden die Bauteile während des Aufschmelzens zusammengepresst. Während des Aufschmelzens dient dies der besseren Wärmeübertragung in das Material. Nach dem Herausziehen kann durch den äußeren Druck ein schneller Volumenausgleich und eine Konsolidierung der Fügezone vorgenommen werden.

Gemäß einer Weiterbildung wird ein die Bauteile zusammenpressender Druck während des Trennens und/oder Herausziehens gelöst oder verringert. Auf diese Weise wird Reibung reduziert und eine Relativbewegung der Leiterelemente zu dem geschmolzenen Material erleichtert.

Gemäß einer Ausführungsform werden die Leiterelemente bei dem Herausziehen vollständig aus der Fügezone entfernt. Auf diese Weise wird die Festigkeit der Fügezone dauerhaft gewährleistet.

Gemäß einer Ausführungsform wird zusätzlich zu dem Einleger ein Schweißzusatzwerkstoff, insbesondere eine thermoplastische Folie, in der Fügezone angeordnet, welcher mit aufgeschmolzen wird und/oder mittels welchem bei oder nach dem Herausziehen der Leiterelemente ein Volumenausgleich vorgenommen wird. Auf diese Weise können die Leiterelemente nach dem Aufschmelzen leicht herausgezogen werden. Ferner kann anschließend eine stoffschlüssigen Verbindung der Fügezone mit hoher Festigkeit erreicht werden.

Gemäß einer Ausführungsform ist zur Aufteilung der Fügezone in mehrere Fügeabschnitte eine Mehrzahl in Querrichtung nebeneinander angeordneter Einleger vorgesehen. Alternativ oder zusätzlich kann der Einleger in Querrichtung in eine Mehrzahl von Abschnitten, insbesondere isolierten Abschnitten, getrennt werden. Insbesondere kann dies durch Trennen der Querverbindungen vorgenommen werden. Auf diese Weise ist ein sequenzielles Fügen der Fügeabschnitte oder - sofern genügend Energiequellen zur Verfügung stehen - auch ein gemeinsames Fügen sämtlicher Fügeabschnitte ermöglicht. Es kann somit eine beliebige Länge der Fügezone realisiert werden.

Bei einer Ausführungsform eines erfindungsgemäßen Einlegers sind die parallelen elektrischen Leiterelemente jeweils länglich und entlang einer Längsrichtung gerade ausgebildet. Auf diese Weise ist das gemeinsame Aufbringen der Zugkraft über die Querverbindung ermöglicht. Ferner können die Leiterelemente so gemeinsam in der Längsrichtung aus der Fügezone herausgezogen werden.

Gemäß einer weiteren Ausführungsform umfasst die Trennstelle eine mittige Verjüngung der Leiterelemente. Insbesondere kann es sich um eine Kerbe oder um eine kontinuierliche Verjüngung handeln.

Gemäß einer Ausführungsform sind die Leiterelemente mit einer der Querverbindungen kraftschlüssig gekoppelt, wobei der Kraftschluss durch die Zugkraft überwindbar ausgebildet ist. Somit kann der Einleger in einfacher vorbestimmter Weise getrennt werden. Ferner ist so eine reversibel lösbare und verbindbare Kopplung geschaffen, die eine Wiederverwendung des Einlegers erlaubt.

Gemäß einer weiteren Ausführungsform weisen die Querverbindungen einen Mantel mit einem Querleiter und einer Isolierschicht auf, wobei die Zugkraft zum Trennen und/oder Herausziehen der Leiterelemente über den Mantel aufbringbar ist. Der Mantel kann mit einer Querverbindung gekoppelt, beispielsweise formschlüssig gekoppelt sein, oder selbst als Querverbindung vorgesehen sein.

Gemäß einer Ausführungsform sind die Querverbindungen in Querrichtung trennbar bzw. aufteilbar ausgebildet, sodass der Einleger in eine Mehrzahl von isolierten Abschnitten aufteilbar ist. Somit ist eine Länge des Einlegers frei anpassbar.

Gemäß einer bevorzugten Ausführungsform weisen die Leiterelemente eine elektrisch isolierende Beschichtung auf. Insbesondere ist die Beschichtung zur ausreichenden und gleichmäßigen Wärmeübertragung in die Fügezone ausgebildet.

Gemäß einer Ausführungsform weist die elektrisch isolierende Beschichtung eine Adhäsion mit den Leiterelementen auf, welche höher als eine Adhäsion mit dem thermoplastischen Material der Bauteile vorgesehen ist. Somit wird eine Abschälung der Beschichtung bei dem Herausziehen vermieden.

Gemäß einer Ausführungsform enthält die Beschichtung eine Antihaftbeschichtung, sodass bei dem Herausziehen kein thermoplastisches Material aus der Fügezone herausgezogen wird. Beispielsweise kann dazu eine Antihaftbeschichtung an der äußeren Oberfläche einer Isolation vorgesehen sein. Die Antihaftbeschichtung kann ferner dienlich sein um im Falle einer reversiblen Trennung eine Reinigung zur Wiederverwendung der Leiterstruktur zu erleichtern.

Gemäß einer Ausführungsform ist die Beschichtung im Falle eine kraftschlüssigen Verbindung zwischen Leiterelement und Querverbindung zur Abstützung der mechanischen Verschluss- bzw. Kraftschlusspressung ausgelegt. Somit bleibt eine Wiederverwendbarkeit gewährleistet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische perspektivische Darstellung eines zwischen zwei thermoplastischen Bauteilen angeordneten Einlegers;
- Fig. 2: den Einleger gemäß Fig. 1 mit einer Stromversorgung zum Verschweißen der Bauteile;
- Fig. 3: den Einleger gemäß Fig. 1 und 2 mit getrennten Leiterelementen;
- Fig. 4: eine schematische Schnittansicht einer konsolidierten Fügezone nach dem Herausziehen der Leiterelemente;
- Fig. 5: eine perspektivische Darstellung der einzelnen Elemente eines Einlegers gemäß einer Ausführungsform;
- Fig. 6A: eine perspektivische Darstellung eines Einlegers mit einer Trennstelle im mittigen Bereich der Leiterelemente;
- Fig. 6B: der Einleger gemäß Fig. 6A mit getrennten Leiterelementen;
- Fig. 7: eine schematische Schnittdarstellung eines mittigen Bereichs eines Leiterelements gemäß einer Ausführungsform;
- Fig. 8: eine schematische Darstellung eines mittigen Bereich eines Leiterelements gemäß einer weiteren Ausführungsform;
- Fig. 9A: eine perspektivische Darstellung eines Einlegers mit einer Trennstelle in einem Stoßbereich der Leiterelemente mit einer Querverbindung;
- Fig. 9B: der Einleger gemäß Fig. 9A mit getrennten Leiterelementen;
- Fig. 10: eine schematische Darstellung einer Kopplung eines Leiterelements mit einer Querverbindung gemäß einer Ausführungsform;
- Fig. 11: eine schematische Darstellung trennbarer Bereiche einer Querverbindung; und
- Fig. 12: eine schematische Darstellung einer Aneinanderreihung von Einlegern in einer gemeinsamen Fügezone.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

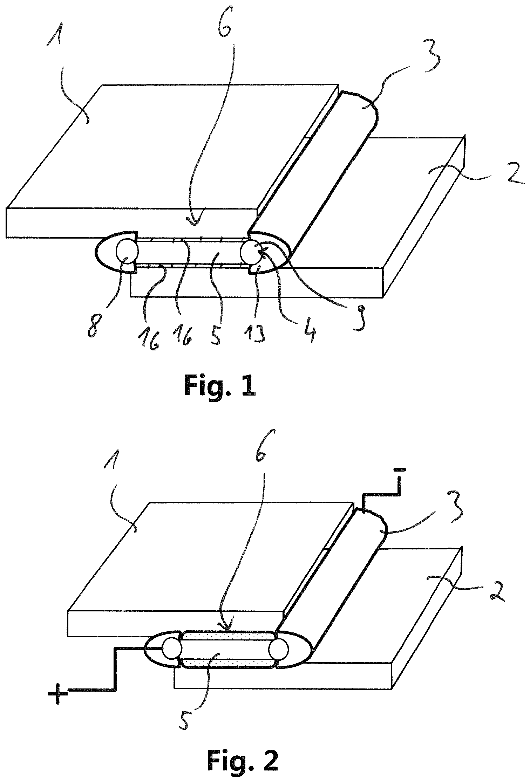

Fig. 1 zeigt eine schematische perspektivische Darstellung eines zwischen zwei Bauteilen 1, 2 angeordneten Einlegers 3.

Rein schematisch sind die Bauteile 1, 2 hier zur Illustration quaderförmig dargestellt. Selbstverständlich kann es sich bei weiteren Ausführungsformen auch um unterschiedlichste andersartige Bauteilgeometrien, beispielsweise gewölbte Bauteile oder dergleichen, handeln. Denkbar wäre beispielsweise Strukturteile eines Luft oder Raumfahrzeugs, wie Teile eines Flugzeugrumpfes oder dergleichen, zum Fügen derselben auf diese Weise anzuordnen.

Der Einleger 3 weist eine Leiterstruktur 4 mit einer Vielzahl paralleler elektrisch leitender Leiterelemente 5 auf. Die Leiterelemente 5 sind in einer Fügezone 6 zwischen dem ersten thermoplastischen Bauteil 1 und dem zweiten thermoplastischen Bauteil 2 angeordnet und befinden sich somit zumindest abschnittsweise in der Fügezone 6.

Neben den Leiterelementen 5 weist die Leiterstruktur 4 an beiden längsseitigen Enden der Leiterelemente 5 jeweils eine außerhalb oder am Rand der Fügezone 6 angeordnete Querverbindung 8, 9 auf, welche mit einem isolierenden Mantel 13 versehen sind. Bei der dargestellten Ausführungsform sind die Querverbindungen 8, 9 rein schematisch mit rundem Querschnitt dargestellt. Die jeweiligen Mäntel 13 sind rein beispielhaft mit einem halbovalen Querschnitt dargestellt. Selbstverständlich sind unterschiedlichste Querschnittsformen möglich und an die Bauteil- und Stoßsituation anpassbar.

Darüber hinaus ist hier zusätzlich zu dem Einleger 3 ein Schweißzusatzwerkstoff 16 in der Fügezone 6 angeordnet. Beispielsweise kann es sich dabei um eine thermoplastische Folie handeln. Ein derartiger Schweißzusatzwerkstoff ist lediglich optional und kann je nach Art der zu fügenden Werkstoffe und Geometrie des Einlegers vorgesehen oder weggelassen bzw. in unterschiedlicher Weise und unterschiedlicher Menge vorgesehen werden. Beispielsweise wäre es denkbar, zwischen den Leiterelementen vorgesehene Zwischenräume mit dem Schweißzusatzwerkstoff auszufüllen. Der Schweißzusatzwerkstoff 16 kann in unterschiedlichster Form, neben Folien beispielsweise auch in Block-, Draht-, Pulver- oder Granulatform, vorgesehen sein.

Fig. 2 zeigt den zwischen die Bauteile 1, 2 eingelegten Einleger 3 gemäß Fig. 1 mit einer Stromversorgung zum Verschweißen der Bauteile 1,2.

Die Stromversorgung kann insbesondere mit einem in dem Mantel 13 integrierten Anschlussleiter gekoppelt sein. Es handelt sich bei der Stromversorgung beispielsweise um eine Gleichstrom- und/oder Wechselstromquelle. Mit der Stromversorgung lässt sich der Einleger somit als Wärmeleitungselement zum Widerstandsschweißen der Bauteile 1 und 2 als Fügepartner einsetzen. Durch lokales Schmelzen der Bauteile 1, 2 und ihrer jeweiligen Oberflächen im Bereich der Fügezone 6 mittels des Einlegers 3 wird eine chemische beziehungsweise stoffschlüssige Verbindung zwischen den Bauteilen 1, 2 hergestellt. Die dazu benötigte Wärme wird mittels elektrischer Energie, welche durch den elektrischen Widerstand der Leiterelemente in thermische Energie umgewandelt wird, direkt in der Fügezone 6 abgegeben. Der elektrische Energieeintrag kann dabei über den Prozess variabel vorgesehen sein. Auf diese Weise werden die Bauteile 1, 2 lokal im Bereich der Fügezone durch Bestromen des Einlegers 3 aufgeschmolzen, wie hier mit dem um die Leiterelemente 5 herum dargestellten gepunkteten Bereich illustriert. Darüber hinaus wird auch der Schweißzusatzwerkstoff 16 aufgeschmolzen.

Die Leiterelemente 5 weisen eine elektrisch isolierende Beschichtung auf, welche etwaige Kurzschlüsse mit etwaigen in den Bauteilen 1, 2 enthaltenen Verstärkungsfasern verhindert. Die Beschichtung ist gleichzeitig dünn genug ausgebildet, um eine ausreichende und gleichmäßige Wärmeübertragung von dem Leiterelement 5 in die Fügezone 6 zu erlauben.

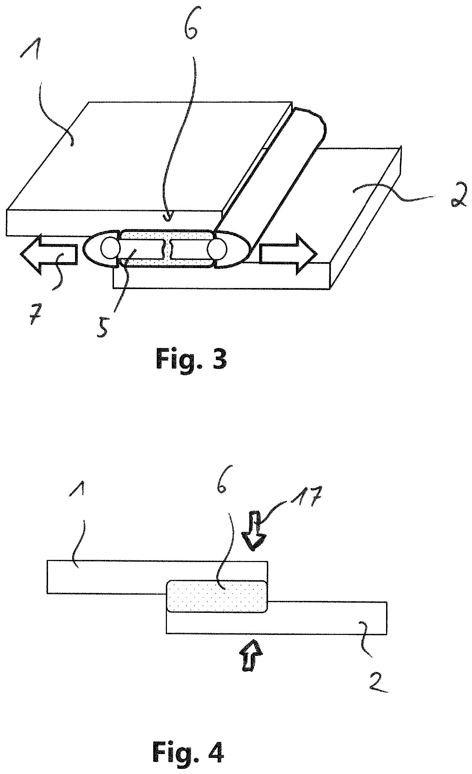

Fig. 3 zeigt den Einleger 3 gemäß Fig. 1 und 2 mit getrennten Leiterelementen 5.

Das Trennen der Leiterelemente 5 wird durch Aufbringen einer hier lediglich schematisch mit Pfeilen dargestellten Zugkraft 7 auf die Leiterelemente 5 vorgenommen. Die Zugkraft 7 wird beispielsweise über den Mantel 13 der Querverbindungen aufgebracht. Sie kann dazu maschinell oder manuell an dem Mantel 13 angelegt werden.

Die Zugkraft 7 führt zu einem Abtrennen zumindest eines Abschnitts eines jeden der Leiterelemente 5 von einer der Querverbindungen 8, 9. Mit der anderen der beiden Querverbindungen 8, 9 bleibt der Abschnitt des Leiterelements 5 verbunden. Sind die Leiterelemente 5 durch die Zugkraft 7 getrennt, können Sie somit dennoch aus der Fügezone 6 seitlich herausgezogen werden. Die Leiterelemente 5 werden bei dem Herausziehen, vorzugsweise vollständig, aus der Fügezone 6 entfernt.

Auf diese Weise wird der komplette Einleger 3 aus der Fügezone 6 durch Herausziehen der getrennten Leiterelemente 5 entfernt. Durch den Schweißzusatzwerkstoff 16 wird bei dem Herausziehen der Leiterelemente 5 ein Volumenausgleich in der Fügezone 6 vorgenommen, sodass es nicht zu Einschlüssen kommt.

Das Material der thermoplastischen Bauteile 1, 2 bzw. im Falle faserverstärkte Bauteile deren thermoplastische Matrix befindet sich während des Entfernens des Einlegers 3 im Bereich der Fügezone 6 oberhalb seiner Schmelztemperatur, sodass eine anschließende Konsolidierung ermöglicht ist.

Die isolierende Beschichtung der Leiterelemente 5 weist eine Adhäsion mit den Leiterelementen auf, welche höher als eine Adhäsion mit dem thermoplastischen Material der Bauteile 1, 2 vorgesehen ist. Somit wird eine Abschälung der Beschichtung bei dem Herausziehen vermieden. Ferner kann die Beschichtung eine Antihaftbeschichtung aufweisen, sodass bei dem Herausziehen kein thermoplastisches Material aus der Fügezone 6 mit herausgezogen wird.

Fig. 4 zeigt eine schematische Schnittansicht einer konsolidierten Fügezone 6 nach dem Herausziehen der Leiterelemente 5.

Zum Konsolidieren wird ein hier schematisch mit Pfeilen dargestellter Druck 17 auf die Fügezone 6 ausgeübt. Denkbar wäre ferner ein Nachwärmen der Fügezone 6, um etwaige innere Spannungen abzubauen.

Ferner können auch bereits während des Aufschmelzens die Bauteile 1, 2 zumindest in dem Bereich der Fügezone 6 zusammengepresst werden. Auf diese Weise wird die Wärmeleitung in der Fügezone 6 verbessert. Der die Bauteile 1, 2 zusammenpressende Druck 17 wird jedoch während des Trennens und/oder Herausziehens gelöst oder verringert, um die Reibung zu reduzieren und ein Herausziehen der Leiterelemente zu erlauben, möglichst ohne dass schmelzflüssiges Material der Fügezone 6 mit herausgezogen wird.

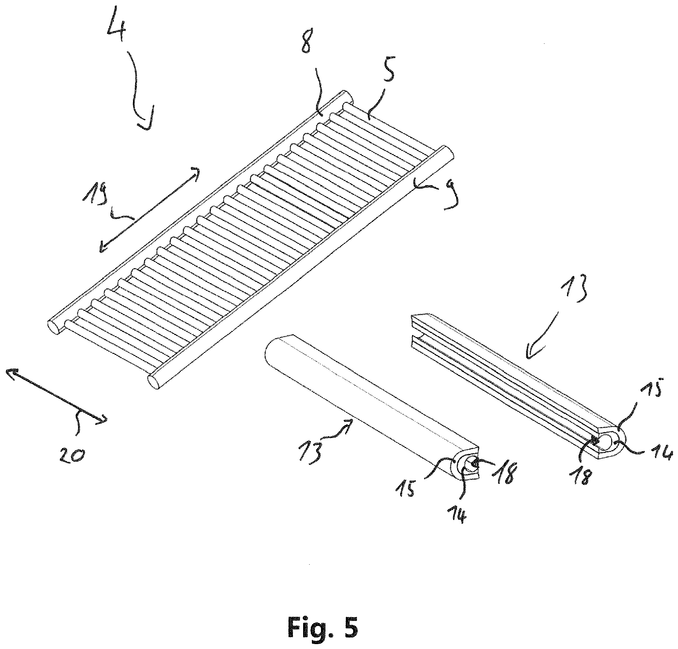

Fig. 5 zeigt eine perspektivische Darstellung der einzelnen Elemente eines Einlegers gemäß einer Ausführungsform.

Die Leiterstruktur 4 ist hier separat von dem Mantel 13 dargestellt. Gemäß der dargestellten Ausführungsform weist die Leiterstruktur 4 jeweils eine zur Anordnung außerhalb oder am Rand der Fügezone 6 vorgesehene erste Querverbindung 8 an einem ersten längsseitigen Ende und zweite Querverbindung 9 an einem zweiten längsseitigen Ende der Leiterelemente 5 auf. Die Leiterelemente 5 enden an den Querverbindungen 8, 9, sodass die elektrische Leiterstruktur 4 in der Form einer Leiter bzw. leiterförmig mit den Querverbindungen 8, 9 als Holmen und den Leiterelementen 5 als Sprossen ausgebildet ist.

Eine Kopplung zwischen den Leiterelementen 5 und den Querverbindungen 8, 9 kann fest, insbesondere stoffschlüssig, oder reversibel lösbar, beispielsweise kraftschlüssig, ausgebildet sein. Auf diese Weise lässt sich einerseits eine gemeinsame Bestromung der Leiterelemente 5 und zudem eine gemeinsame Zugkraft auf die Leiterelemente 5 aufbringen.

Die Querverbindungen 8, 9 sind hier ebenfalls als Leiter ausgebildet. Um eine Erwärmung im Bereich der Querverbindungen 8, 9 möglichst zu vermeiden ist hier ein deutlich größerer Querschnitt gewählt als im Bereich der Leiterelemente 5. Zusätzlich stellen auch die Mäntel 13 einen damit direkt koppelbaren Leiterquerschnitt bereit.

Die Mäntel 13 weisen dazu jeweils neben einer äußeren Isolierschicht 15 einen Anschlussleiter 14 auf. Dieser erstreckt sich über die gesamte Länge des jeweiligen Mantels 13, d.h. im montierten Zustand parallel zu den Querverbindungen 8, 9. Die Anschlussleiter 14 sind hier mit einer der Negativform der Querverbindung 8, 9 entsprechenden Nut 18 versehen, in welcher die Querverbindungen 8, 9 formschlüssig aufnehmbar sind. Zur Montage lassen sich die Mäntel 13 somit auf die Querverbindungen 8, 9 seitlich aufschieben.

Die Isolierschicht 15 dient neben der Isolation auch der Bereitstellung einer zum Aufbringen der Zugkraft 7 geeigneten Angriffsfläche für entweder ein manuelles oder maschinelles Ziehen. Durch den Formschluss mit dem Anschlussleiter 14 wird die Zugkraft 7 direkt auf die Querverbindung 8, 9 und somit auf die Leiterelemente 5 übertragen.

Die Leiterelemente 5 sind jeweils länglich und entlang einer gemeinsamen Längsrichtung 20 gerade ausgebildet. In der dargestellten Ausführungsform verlaufen sie senkrecht zu den Querverbindungen 8, 9. Die formschlüssige Aufnahme der Querverbindungen 8, 9 in der Nut 18 überträgt Kräfte normal zu der Querrichtung 19. Das Aufbringen der Zugkraft 7 und das Herausziehen der Leiterelemente 5 wird somit automatisch in der Längsrichtung 20 vorgenommen.

Die Leiterelemente 5 weisen ferner jeweils eine vorbestimmten Trennstelle 11 auf, welche zum Trennen des Leiterelements 5 durch eine an zumindest einer der Querverbindungen 8, 9 aufgebrachte Zugkraft 7 ausgebildet ist.

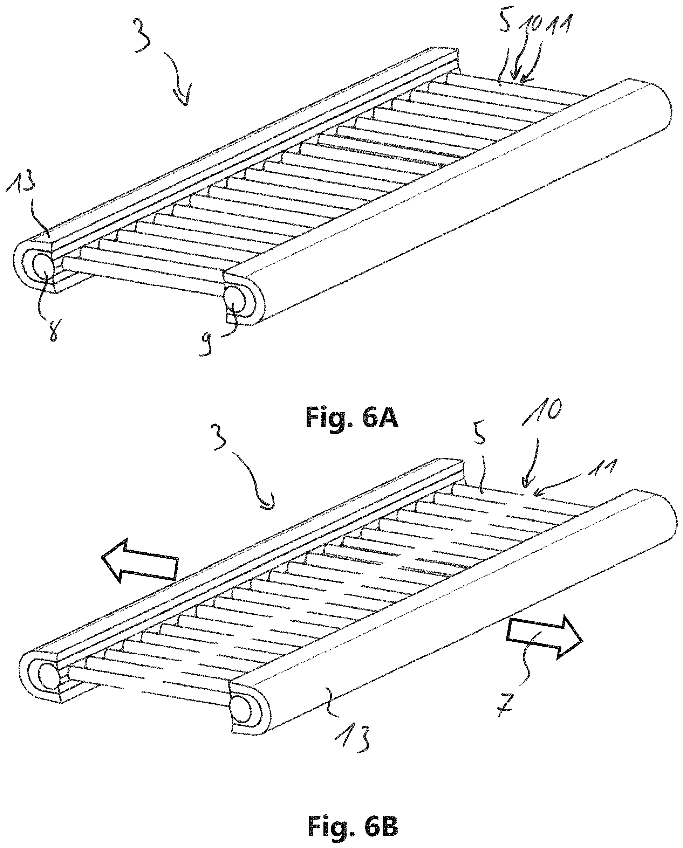

Fig. 6A zeigt eine perspektivische Darstellung eines Einlegers 3 mit einer Trennstelle 11 im mittigen Bereich 10 der Leiterelemente 5.

Die Darstellung zeigt einen montierten Einleger 3, der in der in Bezug auf Fig. 5 erläuterten Weise aufgebaut ist. Die in dem mittigen Bereich 10 angeordnete Trennstelle 11 kann beispielsweise als Sollbruchstelle ausgebildet sein.

Fig. 6B zeigt der Einleger 3 gemäß Fig. 6A mit getrennten Leiterelementen 5.

Die Leiterelement 5 wurden alle gleichermaßen durch eine an dem Mantel 13 aufgebrachte Zugkraft 7 an der in dem mittigen Bereich 10 angeordneten Trennstelle 11 getrennt. Hierbei kann es sich insbesondere um eine irreversible Trennung, beispielsweise einen Bruch des Leiterelements 5 an einer Sollbruchstelle als Trennstelle 11, handeln. Bei weiteren Ausführungsformen wäre auch eine reversible Trennung denkbar, beispielsweise mit einer Steckverbindung als Trennstelle 11.

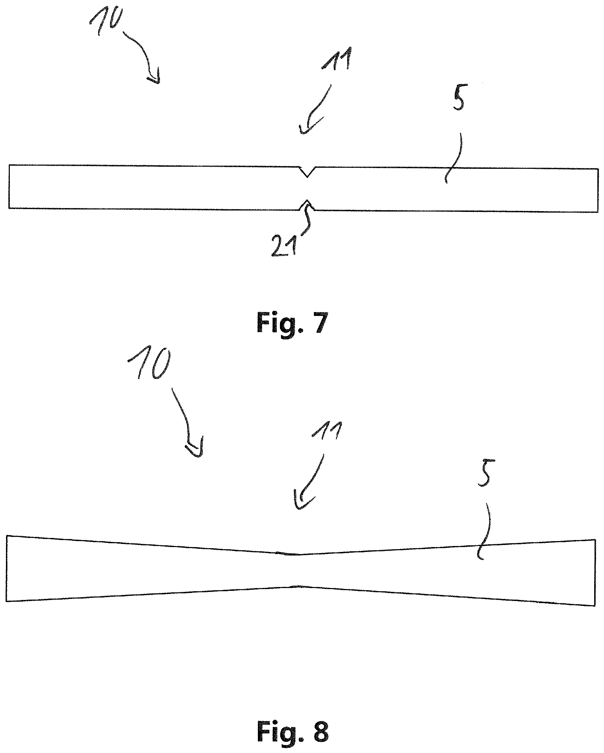

Fig. 7 zeigt eine schematische Schnittdarstellung eines mittigen Bereichs 10 eines Leiterelements 5 gemäß einer Ausführungsform.

Bei dieser Ausführungsform weist die Trennstelle 11 in dem mittigen Bereich 10 eine umlaufende Kerbe 21 auf. Eine derartige Kerbe 21 fungiert als Risskeim, sodass sich bei Aufbringen einer Zugkraft ein letztlich zum Bruch führender Riss ausgehend von der Kerbe 21 ausbreitet. Auf diese Weise ist eine Sollbruchstelle bereitgestellt.

Fig. 8 zeigt eine schematische Darstellung eines mittigen Bereichs 10 eines Leiterelements 5 gemäß einer weiteren Ausführungsform.

Bei dieser Ausführungsform läuft das Leiterelement 5 in dem mittigen Bereich 10 stetig von beiden Seiten zur Mitte hin konisch zu. Eine Trennstelle 11 ist somit im Bereich eines geringsten Querschnitts vorgesehen. Bei Aufbringen einer Zugkraft schnürt sich das Leiterelement 5 im Bereich dieser Trennstelle mit zunehmender Zugkraft immer weiter ein, bis es zu einem Bruch kommt.

Weiterhin weist ein derartiges Leiterelement 5 bei der Bestromung auch ein zur Mitte hin wegen des sinkenden Querschnitts und somit steigenden ohmschen Widerstands ansteigendes Temperaturprofil auf, was zur gleichmäßigen Erwärmung einer Fügezone 6 besonders vorteilhaft ist.

Sowohl bei der Ausführungsform nach Fig. 7 als auch bei der Ausführungsform nach Fig. 8 werden die Leiterelemente 5 somit in dem mittigen Bereich 10 der Leiterelemente 5 getrennt.

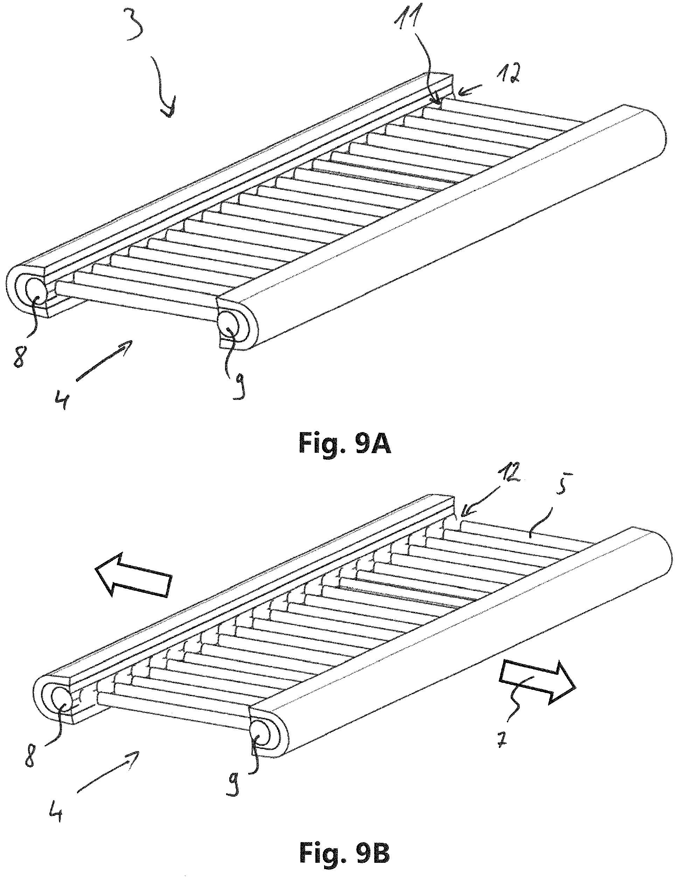

Fig. 9A zeigt eine perspektivische Darstellung eines Einlegers 3 mit einer Trennstelle 11 im einem Stoßbereich 12 der Leiterelemente 5 mit einer Querverbindung 8.

Eine derartige Anordnung ist insbesondere dann vorteilhaft, wenn die Leiterelemente 5 mit einer der Querverbindungen 8, 9 kraftschlüssig gekoppelt sind und der Kraftschluss bei dem Trennen überwunden wird. Beispielsweise kann dazu die Trennstelle 11 eine Rastverbindung der Leiterelemente 5 mit der Querverbindung 8 aufweisen. Die Leiterelemente 5 werden auf diese Weise bei Aufbringen der Zugkraft jeweils in dem Stoßbereich 12 von der Querverbindungen 8 getrennt.

Fig. 9B zeigt den Einleger gemäß Fig. 9A mit getrennten Leiterelementen 5.

Durch die Zugkraft 7 wurde hier die kraftschlüssige Verbindungen gelöst, sodass die Leiterelemente 5 in dem Stoßbereich 12 von der Querverbindung 8 gelöst sind.

Eine isolierende Beschichtung der Leiterelemente 5 ist hier zur Abstützung der mechanischen Verschluss- bzw. Kraftschlusspressung ausgelegt. In Verbindung mit einer Antihafteigenschaft der Beschichtung ist somit eine Reinigung zur Wiederverwendung der kraftschlüssig verbundenen Leiterstruktur 4 ermöglicht.

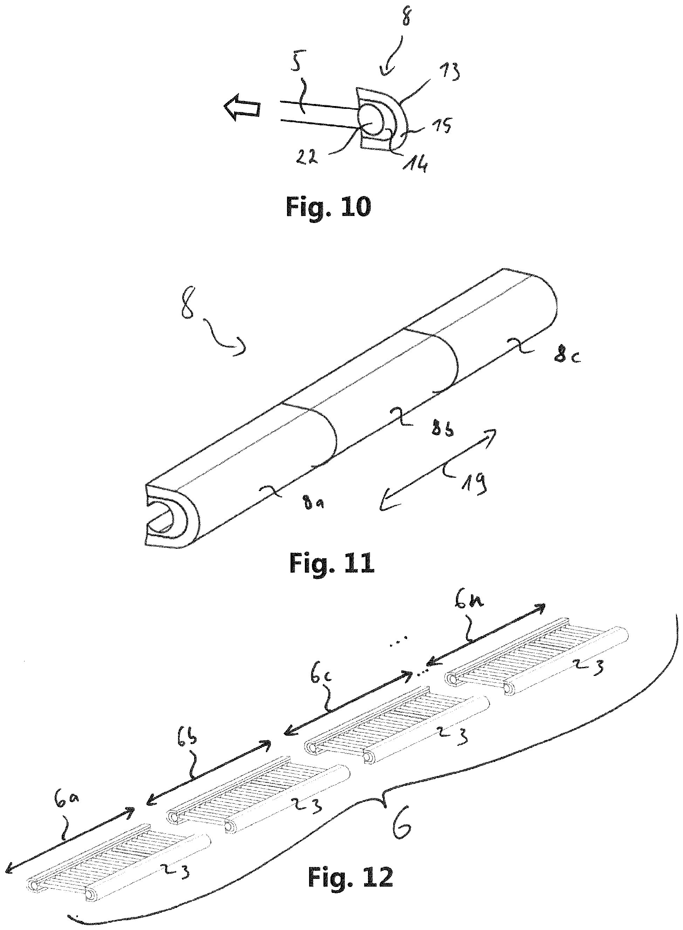

Fig. 10 zeigt eine schematische Darstellung einer Kopplung eines Leiterelements 5 mit einer Querverbindung 8 gemäß einer Ausführungsform.

In diesem Fall ist die Querverbindung 8 durch den Mantel 13 gebildet. Das Leiterelement 5 weist hier einen Zylinder- oder Kugelkopf 22 auf, welcher in der Nut 18 des Anschlussleiters 14 formschlüssig aufgenommen ist. Auf diese Weise können sämtliche Leiterelemente 5 in dem Mantel 13 aufgefädelt werden. Ein gleichmäßiger Abstand zur Herstellung einer parallelen Anordnung der Leiterelemente 5 kann beispielsweise durch in die Nut 18 eingebrachte Abstandselemente gewährleistet werden. Selbstverständlich können bei weiteren Ausführungsformen auch anders geformte individuelle Aufnahmen für jedes Leiterelement 5 in dem als Querverbindung 8 fungierenden Mantel 13 vorgesehen sein.

Eine derartige Anordnung mit einer individuellen Aufnahme eines jeden Leiterelements 5 in dem Querverbindungselement 8 ermöglicht besonders vorteilhaft eine völlig freie und insbesondere auch nachträglich mögliche Trennbarkeit des Einlegers 3 in Querrichtung 19. Auf diese Weise ist der Einleger 3 beispielsweise durch Trennen der Querverbindung 8 auf eine gewünschte Länge zuschneidbar.

Fig. 11 zeigt eine schematische Darstellung trennbarer Segmente 8a, 8b, 8c einer Querverbindung 8.

Rein beispielhaft ist die Querverbindung 8 hier in drei gleich große Segmente 8a, 8b, 8c getrennt, was durch einfaches zuschneiden ermöglicht ist. Selbstverständlich sind beliebige andere Aufteilungen bzw. Zuschnitte möglich. Auf diese Weise können die Segmente 8a, 8b, 8c individuell bzw. unabhängig und insbesondere isoliert voneinander bestromt werden. Somit ist bei Bedarf eine sehr individuelle Erwärmung unterschiedlicher Abschnitte einer Fügezone 6 ermöglicht.

Fig. 12 zeigt eine schematische Darstellung einer Aneinanderreihung von Einlegern 3 in einer gemeinsamen Fügezone 6.

Dazu können mehrere der in Bezug auf die Figuren 5 bis 9 beschriebenen Einleger in Querrichtung nebeneinander angeordnet und somit Fügeabschnitte 6a, 6b, 6c,..., 6n gebildet werden. Diese können entweder sequenziell oder mit mehreren Stromquellen gleichzeitig bestromt werden. Damit kann eine beliebige Länge einer Fügezone 6 gefügt werden. Die Länge einer Fügezone 6 stellt somit vorteilhaft keine Beschränkung bei der Konstruktion und Auslegung dar, was insbesondere bei großflächigen Bauteilen, wie Strukturbauteilen eines Luft- oder Raumfahrzeugs, besonders vorteilhaft ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind unterschiedlichste Querschnittsformen der Leiterelemente, beispielsweise neben runden auch flache oder eckige Querschnittsformen, möglich.

### Bezugszeichenliste

- 1: Bauteil
- 2: Bauteil
- 3: Einleger
- 4: Leiterstruktur
- 5: Leiterelement
- 6: Fügezone
- 7: Zugkraft
- 8: Querverbindung
- 9: Querverbindung
- 10: mittiger Bereich
- 11: Trendstelle
- 12: Stoßbereich
- 13: Mantel
- 14: Anschlussleiter
- 15: Isolierschicht
- 16: Schweißzusatzwerkstoff
- 17: Druck
- 18: Nut
- 19: Querrichtung
- 20: Längsrichtung
- 21: Kerbe
- 22: Zylinder-oder Kugelkopf

## Patentansprüche

1. Verfahren zum Verschweißen thermoplastischer Bauteile (1, 2), insbesondere thermoplastischer Faserverbundstrukturbauteile für ein Luft- oder Raumfahrzeug, mit den Schritten:
Anordnen eines Einlegers (3), der eine Leiterstruktur (4) mit einer Vielzahl paralleler elektrischer Leiterelemente (5) aufweist, in einer Fügezone (6) zwischen einem ersten thermoplastischen Bauteil (1) und einem zweiten thermoplastischen Bauteil (2), so dass sich die parallelen elektrischen Leiterelemente (5) zumindest abschnittsweise in der Fügezone (6) befinden;
Lokales Aufschmelzen der Bauteile (1, 2) im Bereich der Fügezone (6) durch Bestromen der Leiterstruktur (4);
**gekennzeichnet durch**
Trennen der Leiterelemente (5); und
Entfernen des Einlegers (3) aus der Fügezone (6) durch Herausziehen der getrennten Leiterelemente (5).

2. Verfahren nach Anspruch 1, wobei das Trennen der Leiterelemente (5) durch Aufbringen einer Zugkraft (7) auf die Leiterelemente (5) vorgenommen wird.

3. Verfahren nach Anspruch 1 oder 2, wobei die Leiterelemente (5) jeweils länglich und entlang einer gemeinsamen Längsrichtung (20) gerade ausgebildet sind, wobei das Aufbringen der Zugkraft (7) und das Herausziehen in der Längsrichtung (20) vorgenommen wird.

4. Verfahren nach einem der vorangehenden Ansprüche, wobei die Leiterstruktur (4) an beiden längsseitigen Enden der Leiterelemente (5) jeweils eine außerhalb oder am Rand der Fügezone (6) angeordnete Querverbindung (8, 9) aufweist, wobei das Trennen ein Abtrennen zumindest eines Abschnitts eines jeden der Leiterelemente (5) von einer der Querverbindungen (8, 9) umfasst.

5. Verfahren nach einem der vorangehenden Ansprüche, wobei die Leiterelemente (5) in einem mittigen Bereich (10) der Leiterelemente getrennt werden, insbesondere im Bereich einer mittigen Verjüngung (11) der Leiterelemente.

6. Verfahren nach Anspruch 4 oder 5, wobei die Leiterelemente (5) jeweils in einem Stoßbereich (12) mit einer der Querverbindungen (8, 9) getrennt werden.

7. Verfahren nach Anspruch 6, wobei die Leiterelemente (5) mit einer der Querverbindungen (8, 9) kraftschlüssig gekoppelt sind und der Kraftschluss bei dem Trennen überwunden wird.

8. Verfahren nach einem der Ansprüche 2 bis 7, wobei die Querverbindungen einen Mantel (13) aufweisen der einen Anschlussleiter (14) und eine Isolierschicht (15) enthält, wobei die Zugkraft (7) über den Mantel (13) aufgebracht wird.

9. Verfahren nach einem der vorangehenden Ansprüche, wobei sich ein Material der thermoplastischen Bauteile (1, 2) während des Entfernens im Bereich der Fügezone (6) oberhalb seiner Schmelztemperatur befindet.

10. Verfahren nach einem der vorangehenden Ansprüche, wobei die Bauteile (1, 2) während des Aufschmelzens und/oder nach dem Herausziehen zumindest in dem Bereich der Fügezone (6) zusammengepresst werden.

11. Verfahren nach Anspruch 10, wobei ein die Bauteile (1, 2) zusammenpressender Druck (17) während des Trennens und/oder Herausziehens gelöst oder verringert wird.

12. Verfahren nach einem der vorangehenden Ansprüche, wobei zusätzlich zu dem Einleger (3) ein Schweißzusatzwerkstoff (16), insbesondere eine thermoplastische Folie, in der Fügezone (6) angeordnet wird, welcher mit aufgeschmolzen wird und/oder mittels welchem, insbesondere bei dem Herausziehen der Leiterelemente (5), ein Volumenausgleich vorgenommen wird.

13. Verfahren nach einem der vorangehenden Ansprüche, wobei zur Aufteilung der Fügezone (6) in mehrere Fügeabschnitte (6a, 6b, 6c, ... 6n) eine Mehrzahl in Querrichtung nebeneinander angeordneter Einleger (3) vorgesehen ist oder der Einleger (3) in Querrichtung in eine Mehrzahl von Abschnitten getrennt wird, insbesondere durch Trennen der Querverbindungen (8, 9).

14. Einleger (3) zum Widerstandsschweißen thermoplastischer Bauteile, insbesondere mit einem Verfahren gemäß einem der vorangehenden Ansprüche, mit:
einer Vielzahl paralleler elektrischer Leiterelemente (5) mit einer gemeinsamen Längsrichtung (20);
einer ersten Querverbindung (8) an einem ersten längsseitigen Ende und einer zweiten Querverbindung (9) an einem zweiten längsseitigen Ende der Leiterelemente (5);
**gekennzeichnet durch**
eine vorbestimmten Trennstelle (11) an jedem Leiterelement (5), welche zum Trennen des Leiterelements (5) durch eine an zumindest einer der Querverbindungen (8, 9) aufgebrachte Zugkraft (7) ausgebildet ist.

15. Einleger nach Anspruch 14, wobei die Leiterelemente (5) eine elektrisch isolierende Beschichtung aufweisen, welche eine Wärmeübertragung zulässt und/oder eine Antihaftbeschichtung enthält.

## Claims

1. A method for welding thermoplastic components (1, 2), in particular thermoplastic fiber composite structural components for an aircraft or spacecraft, with the steps:
arranging an insert (3) which has a conductor structure (4) with a multiplicity of parallel electrical conductor elements (5). , in a joining zone (6) between a first thermoplastic component (1) and a second thermoplastic component (2), so that the parallel electrical conductor elements (5) are at least partially in the joining zone (6);
Local melting of the components (1, 2) in the area of the joining zone (6) by energizing the conductor structure (4);
**characterized by**
separating the conductor elements (5); and
removing the insert (3) from the joining zone (6) by pulling out the separate conductor elements (5).

2. The method according to claim 1, wherein the separating of the conductor elements (5) is carried out by applying a tensile force (7) to the conductor elements (5).

3. The method according to claim 1 or 2, wherein the conductor elements (5) are each elongate and straight along a common longitudinal direction (20), the application of the tensile force (7) and the pulling out being carried out in the longitudinal direction (20).

4. The method according to any of the preceding claims, in which the conductor structure (4) has a cross-connection (8, 9) on each of the two longitudinal ends of the conductor elements (5) which is arranged outside or at the edge of the joining zone (6), the severing comprising at least of a portion of each of the conductor elements (5) of one of the cross-connections (8, 9).

5. The method according to any one of the preceding claims, wherein the conductor elements (5) are separated in a central area (10) of the conductor elements, in particular in the area of a central taper (11) of the conductor elements.

6. The method according to claim 4 or 5, wherein the conductor elements (5) are each separated in a joint area (12) with one of the cross-connections (8, 9).

7. The method according to claim 6, wherein the conductor elements (5) with one of the cross-connections (8, 9) are non-positively coupled and the non-positive connection is overcome when separating.

8. The method according to any one of claims 2 to 7, wherein the cross-connections have a jacket (13) containing a connecting conductor (14) and an insulating layer (15), the tensile force (7) being applied via the jacket (13).

9. The method according to any one of the preceding claims, wherein a material of the thermoplastic components (1, 2) is above its melting temperature during the removal in the region of the joining zone (6).

10. Method according to any of the preceding claims, in which the components (1, 2) are pressed together during melting and/or after being pulled out, at least in the region of the joining zone (6).

11. Method according to Claim 10, in which a pressure (17) compressing the components (1, 2) is released or reduced during the separation and/or extraction.

12. Method according to any of the preceding claims, in which, in addition to the insert (3), a welding filler material (16), in particular a thermoplastic film, is arranged in the joining zone (6), which is also melted and/or by means of which, in particular when the Conductor elements (5), a volume compensation is made.

13. Method according to any of the preceding claims, wherein a plurality of inserts (3) arranged next to one another in the transverse direction are provided for dividing the joining zone (6) into a plurality of joining sections (6a, 6b, 6c, ... 6n) or the insert (3) is divided into one in the transverse direction Multiple sections is separated, in particular by separating the cross-connections (8, 9).

14. Insert (3) for resistance welding thermoplastic components, in particular using a method according to one of the preceding claims, with:
a multiplicity of parallel electrical conductor elements (5) with a common longitudinal direction (20);
a first transverse connection (8) at a first longitudinal end and a second transverse connection (9) at a second longitudinal end of the ladder elements (5);
**characterized by**
a predetermined separation point (11) on each conductor element (5), which is designed to separate the conductor element (5) by a tensile force (7) applied to at least one of the cross-connections (8, 9).

15. Insert according to claim 14, wherein the conductor elements (5) have an electrically insulating coating which allows heat transfer and/or contains a non-stick coating.

## Revendications

1. Procédé de soudage de composants thermoplastiques (1, 2), en particulier de composants structuraux en composite de fibres thermoplastiques pour aéronef ou engin spatial, comprenant les étapes consistant à :
disposer un insert (3) qui présente une structure conductrice (4) avec une multiplicité de éléments conducteurs électriques (5). , dans une zone de jonction (6) entre un premier composant thermoplastique (1) et un deuxième composant thermoplastique (2), de sorte que les éléments conducteurs électriques parallèles (5) sont au moins partiellement dans la zone de jonction (6);
Fusion locale des composants (1, 2) au niveau de la zone de jonction (6) par excitation de la structure conductrice (4) ;
**caractérisé par**
la séparation des éléments conducteurs (5); et
retirer l'insert (3) de la zone de jonction (6) en tirant sur les éléments conducteurs séparés (5).

2. Procédé selon la revendication 1, dans lequel la séparation des éléments conducteurs (5) est réalisée en appliquant une force de traction (7) aux éléments conducteurs (5).

3. Procédé selon la revendication 1 ou 2, dans lequel les éléments conducteurs (5) sont chacun allongés et rectilignes selon une direction longitudinale commune (20), l'application de l'effort de traction (7) et le tirage s'effectuant dans le sens direction longitudinale (20).

4. Procédé selon l'une des revendications précédentes, dans lequel la structure conductrice (4) présente une interconnexion (8, 9) sur chacune des deux extrémités longitudinales des éléments conducteurs (5) qui est disposée à l'extérieur ou en bordure de la zone de jonction (6), le sectionnement comprenant au moins une partie de chacun des éléments conducteurs (5) d'une des interconnexions (8, 9).

5. Procédé selon l'une quelconque des revendications précédentes, dans lequel les éléments conducteurs (5) sont séparés dans une zone centrale (10) des éléments conducteurs, notamment au niveau d'un cône central (11) du éléments conducteurs.

6. Procédé selon la revendication 4 ou 5, dans lequel les éléments conducteurs (5) sont séparés chacun dans une zone de jonction (12) avec l'une des interconnexions (8, 9).

7. Procédé selon la revendication 6, dans lequel les éléments conducteurs (5) avec l'une des connexions transversales (8, 9) sont couplés de manière non positive et la connexion non positive est surmontée lors de la séparation.

8. Procédé selon l'une quelconque des revendications 2 à 7, dans lequel les interconnexions comportent une gaine (13) contenant un conducteur de liaison (14) et une couche isolante (15), l'effort de traction (7) étant appliqué via le veste (13).

9. Procédé selon l'une quelconque des revendications précédentes, dans lequel un matériau des composants thermoplastiques (1, 2) est au-dessus de sa température de fusion lors du retrait au niveau de la zone de jonction (6).

10. Procédé selon l'une des revendications précédentes, dans lequel les composants (1, 2) sont pressés l'un contre l'autre pendant la fusion et/ou après l'extraction, au moins dans la zone de la zone de jonction (6).

11. Procédé selon la revendication 10, dans lequel une pression (17) comprimant les composants (1, 2) est relâchée ou réduite pendant la séparation et/ou l'extraction.

12. Procédé selon l'une des revendications précédentes, dans lequel, en plus de l'insert (3), un matériau d'apport de soudage (16), en particulier un film thermoplastique, est disposé dans la zone de jonction (6), qui est également fondue et /ou au moyen duquel, notamment au niveau des éléments conducteurs (5), une compensation volumique est réalisée.

13. Procédé selon l'une des revendications précédentes, dans lequel plusieurs inserts (3) disposés les uns à côté des autres dans la direction transversale sont prévus pour diviser la zone de jonction (6) en plusieurs sections de jonction (6a, 6b, 6c, ... 6n) ou l'insert (3) est divisé en un seul dans le sens transversal. Plusieurs tronçons sont séparés, notamment en séparant les liaisons transversales (8, 9).

14. Insert (3) pour le soudage par résistance de composants thermoplastiques, notamment selon un procédé selon l'une des revendications précédentes, avec :
une multiplicité d'éléments conducteurs électriques parallèles (5) avec une direction longitudinale commune (20);
une première liaison transversale (8) à une première extrémité longitudinale et une seconde liaison transversale (9) à une seconde extrémité longitudinale des éléments d'échelle (5) ;
**caractérisé par**
un point de séparation prédéterminé (11) sur chaque élément conducteur (5), qui est conçu pour séparer l'élément conducteur (5) par une force de traction (7) appliquée à au moins une des connexions transversales (8, 9) .

15. Insert selon la revendication 14, dans lequel les éléments conducteurs (5) ont un revêtement électriquement isolant qui permet le transfert de chaleur et/ou contient un revêtement anti-adhésif.
